# EUROPÄISCHE PATENTSCHRIFT

(11) **EP 4 091 507 B1**
(45) Veröffentlichungstag und Bekanntmachung des Hinweises auf die Patenterteilung: **25.02.2026**
(21) Anmeldenummer: 22172827.2
(22) Anmeldetag: 11.05.2022
(51) Int. Cl.: A47J 31/42, A47J 31/44, A47J 31/12

(54) **KAFFEEMASCHINE**
COFFEE MACHINE
MACHINE À CAFÉ

(30) Priorität: 18.05.2021 DE 102021112895
(43) Veröffentlichungstag der Anmeldung: 23.11.2022
(73) Patentinhaber: Melitta Europa GmbH & Co. KG, 32427 Minden (DE)
(72) Erfinder: SACHTLEBEN, Andreas, 32427 Minden (DE); KUTZBACH, Daniel, 32429 Minden (DE)
(74) Vertreter: Dantz, Jan Henning

(56) Entgegenhaltungen:
- WO-A1-2019/174126
- US-A- 4 913 037
- US-A1- 2009 031 902

## Beschreibung

Die vorliegende Erfindung betrifft eine Kaffeemaschine mit einem Behälter für Kaffeebohnen, einem Mahlwerk, dem Kaffeebohnen aus dem Behälter zuführbar sind, einem Filterhalter, in den gemahlenes Kaffeemehl aus dem Mahlwerk über einen Schacht zuführbar ist und einer Zuführeinrichtung für heißes Wasser, das in den Filterhalter einleitbar ist, wobei in dem Schacht zwischen Mahlwerk und Filterhalter eine Verschlussvorrichtung mit einer drehbaren Klappe vorgesehen ist, die zwischen einer Öffnungs- und einer Schließposition bewegbar ist, wobei die Klappe über eine Achse drehbar ist, die im Wesentlichen parallel zu einer Ebene der Klappe verläuft.

Die DE 20 2004 007 182 U1 offenbart eine Kaffeemaschine, bei der eine Kaffeemühle oberhalb eines Filterhalters zur Aufnahme von Kaffeemehl angeordnet ist. Von der Kaffeemühle kann gemahlenes Kaffeemehl durch einen Schacht in den Filterhalter gefördert werden, wobei der Schacht durch eine Abschirmplatte verschließbar ist. Die Abschirmplatte ist über eine Feder in die geschlossene Position vorgespannt und durch einen Schalter in eine Öffnungsposition bewegbar. Dadurch lässt sich eine gewisse Abschirmung erhalten, allerdings lässt sich eine Abdichtung zu dem Mahlwerk schlecht realisieren, da die Abschirmplatte parallel zur Dichtebene bewegt wird, was zu einer Beanspruchung und Abnutzung eines Dichtelementes an der Dichtebene führt.

Eine ähnliche Trennvorrichtung für eine Kaffeemaschine offenbart auch die DE 20 2008 016 826 U1. Bei dieser Trennvorrichtung ist eine Trennscheibe entlang einer Dichtung an einem Fallschacht zwischen Kaffeemühle und Filterhalter bewegbar ist. Auch hier kann es zu Abrieb durch die Bewegung der Trennscheibe relativ zu der Dichtung kommen.

In der WO 2007/106947 ist eine Kaffeemaschine mit einem Mahlwerk offenbart, über das Kaffeemehl in einen Filterhalter eingeleitet werden kann. Eine verschwenkbare Klappe zum Verschließen liegt in der geschlossenen Position an einer Unterseite eines Schachtes an, so dass die Abdichtung unzureichend ist.

In der US 4,913,037 ist eine Mahlvorrichtung mit einem Aufnahmebehälter für Kaffeemehl offenbart, wobei in dem Schacht zur Zuführung von Kaffeemehl in den Aufnahmebehälter eine Verschlussvorrichtung mit einer verschwenkbaren Klappe angeordnet ist. Die Klappe kann dabei von unten gegen eine Dichtung zwischen Schacht und einer Gehäusewand bewegt werden. Eine ähnliche Verschlussvorrichtung für eine Kaffeemahlwerk offenbart auch US 2009/0031902, allerdings ohne Dichtung zwischen dem Schacht und der Verschlussklappe.

Die WO 2019/174126 offenbart einen Schacht mit einer Verschlussklappe, die relativ zu der Dichtung verschwenkbar ist, so dass die Verschlussklappe bei einer Bewegung entlang der Dichtung gleitet.

Es ist daher Aufgabe der vorliegenden Erfindung, eine Kaffeemaschine zu schaffen, bei der eine verbesserte Abdichtung zwischen einem Mahlwerk und einem Filterhalter geschaffen wird, um eine Beeinträchtigung der Mühlenfunktion zu vermeiden.

Diese Aufgabe wird mit einer Kaffeemaschine mit den Merkmalen des Anspruches 1 gelöst.

Bei der erfindungsgemäßen Kaffeemaschine ist in dem Schacht zwischen Mahlwerk und Filterhalter eine Verschlussvorrichtung mit einer drehbaren Klappe vorgesehen, die um eine Achse drehbar ist, die im Wesentlichen parallel zu einer Ebene der Klappe verläuft, wobei am äußeren Umfang der Klappe eine elastische Dichtung vorgesehen ist. Dadurch bewegt sich die Klappe zwischen der Öffnungs- und Schließposition nicht parallel zur Ebene der Klappe, was zu einer Schleifbewegung entlang einer Dichtung führt, sondern mit einer Schwenkbewegung auf die Dichtebene in die Verschlussposition zu oder von der Verschlussposition weg. Diese Bewegung der Klappe verringert die Abnutzung an dem Dichtelement und sorgt somit für eine zuverlässigere Abdichtung.

Vorzugsweise entspricht die Ebene der Klappe einer Dichtebene in der Schließposition. Die Dichtebene kann beispielsweise durch die Anlage der Klappe oder einer Dichtung der Klappe an einer Schachtwand definiert werden. Diese Ebene ist im Wesentlichen parallel zur Drehachse der Klappe, wobei die Achse auch in einem kleineren Winkel zur Ebene der Klappe angeordnet sein kann, beispielsweise < 20°, insbesondere < 10°.

Die Klappe weist vorzugsweise in der Schließposition eine Oberseite auf, die zumindest teilweise in dem Schacht angeordnet ist, wobei die Oberseite der Klappe in der Öffnungsposition einen Wandabschnitt ausbildet, der der Innenseite des Schachtes zugewandt ist. Dadurch wird ein etwaiger Belag mit Kaffeemehl an der ebenen Oberseite beim Drehen der Klappe in die Öffnungsposition in den Schacht abgeworfen.

In einer bevorzugten Ausgestaltung ist die Achse der Klappe außerhalb des Schachtes angeordnet. Dadurch steht nur ein Teil der Klappe in der Schließposition in den Fallschacht hervor, insbesondere ein Teil der weniger als 50 % der Oberfläche der Klappe in Draufsicht einnimmt. Dadurch kann die Betätigungsmechanik für die Klappe außerhalb des Schachtes vorgesehen werden, was zu einer verbesserten Hygiene führt.

Die Klappe wird vorzugsweise zwischen Öffnungs- und Schließposition um einen Winkel zwischen 60° bis 120°, insbesondere 80° bis 100°, gedreht. Dabei kann sich die Achse in der aufgestellten Position der Kaffeemaschine in einer horizontalen Ebene erstrecken, so dass die Klappe von einer horizontalen Schließposition in eine im Wesentlichen vertikale Öffnungsposition überführt werden kann.

Neben dem Schacht ist vorzugsweise eine nach unten offene Aufnahmekammer ausgebildet, in die die Klappe in einer Öffnungsposition zumindest teilweise einfügbar ist. Dadurch ist die Klappe in einer Öffnungsposition geschützt angeordnet, und das Kaffeemehl kann direkt von dem Fallschacht in den Filterhalter überführt werden. Vorzugsweise verschließt die Klappe in der Schließposition den Schacht und auch die nach unten offene Aufnahmekammer, insbesondere dampfdicht.

Die Klappe ist vorzugsweise im Wesentlichen plattenförmig ausgebildet, wobei erfindungsgemäß am äußeren Umfang der Klappe eine elastische Dichtung vorgesehen ist. Diese Dichtung besitzt erfindungsgemäß eine biegbare Dichtlippe, die in der Schließposition für eine Abdichtung gegenüber einer Wand des Schachtes sorgt.

Die Klappe ist vorzugsweise so angeordnet, dass eine Unterseite der Klappe in der Schließposition in einer Öffnungsposition zur Außenseite des Schachtes gewandt ist, so dass der Bereich, der beim Brühen von Kaffee mit Wasserdampf in Berührung kommt, zur Außenseite gewandt ist und dort kein Kaffeemehl ankleben kann. Vorzugsweise ist der Schacht unterhalb der Klappe aufspreizend ausgebildet, also geneigt zur Vertikalen angeordnet, beispielsweise in einem Winkel zwischen 20° bis 60°, damit in diesem Bereich des Schachtes möglichst kein Kaffeemehl beim Fallen durch den Schacht anhaftet.

Die Drehbewegung der Klappe in Öffnungsrichtung kann durch einen Anschlag begrenzt werden, der vorzugsweise an der Klappe ausgebildet ist und der mit einer Wand des Schachtes zusammenwirkt, um bei Erreichen der Öffnungsposition eine weitere Drehung zu verhindern. Auch bei Erreichen der Schließposition kann ein Abschnitt der Klappe an einer Wand des Schachtes zur Anlage kommen, um die Drehbewegung zu begrenzen, so dass keine zusätzlichen Anschlagselemente vorgesehen werden müssen.

Für eine einfache Herstellung kann die Klappe ein integral ausgebildetes Lager zur Aufnahme der Achse aufweisen, beispielsweise in Form einer hülsenförmigen Durchführung. Die Lageraufnahme kann dabei einen von der Kreisform abweichenden Querschnitt aufweisen, um auf einfache Weise drehfest mit der Achse verbunden zu werden.

Für eine effektive Handhabung kann die Klappe über einen Motor angetrieben sein, der über ein Getriebe mit der Achse verbunden ist. Das Getriebe kann als Zahnradgetriebe ausgebildet sein, aber auch andere Getriebeelemente aufweisen.

Für eine gute Führung des aus dem Mahlwerk austretenden Kaffeemehls kann der Schacht zwischen Mahlwerk und Filterhalter winkelförmig verlaufen, so dass hinter dem Mahlwerk eine Rutsche ausgebildet ist, die dann in einen vertikalen Abschnitt des Schachtes führt.

Die Erfindung wird nachfolgend anhand eines Ausführungsbeispiels mit Bezug auf die beigefügten Zeichnungen näher erläutert. Es zeigen:

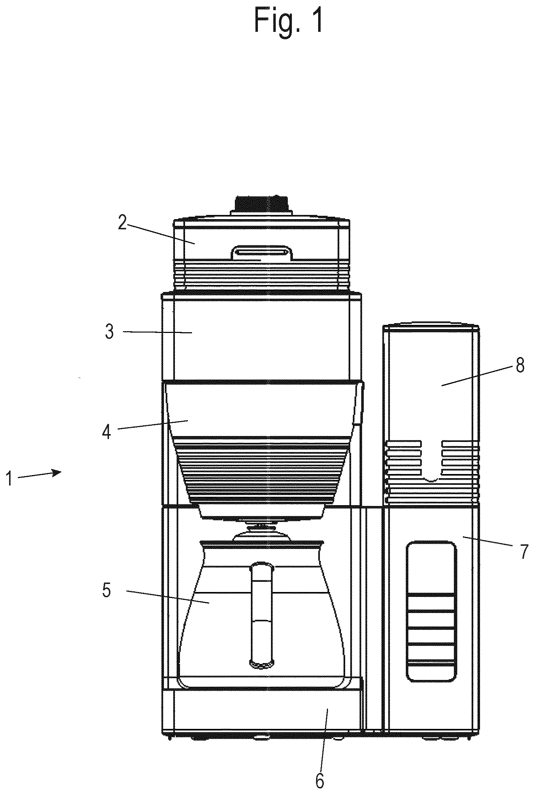

- Figur 1: eine Ansicht der erfindungsgemäßen Kaffeemaschine;
- Figur 2: eine Schnittansicht durch die Kaffeemaschine im Bereich des Schachtes mit geöffneter Klappe;
- Figur 3: eine Schnittansicht im Bereich des Schachtes mit geschlossener Klappe;
- Figur 4: eine Unteransicht auf den Schacht in der geschlossenen Position, und
- Figuren 5A und 5B: zwei Detailansichten der Klappe mit der Achse.

Eine Kaffeemaschine 1 umfasst einen Behälter 2 zur Aufnahme von Kaffeebohnen, der oberhalb eines Mahlwerkes 3 angeordnet ist. Unter dem Mahlwerk 3 befindet sich ein Filterhalter 4, in dem gemahlenes Kaffeemehl zum Brühen von Kaffee aufnehmbar ist, wobei der gebrühte Kaffee in einer Kanne 5 unter dem Filterhalter 4 gesammelt werden kann. Die Kanne 5 ist auf einem Sockel 6 eines Gehäuses abgestellt, das eine Bedieneinheit 7 mit einer Steuerung aufweist. An dem Gehäuse ist ein Wassertank 8 lösbar gehalten, aus dem Wasser durch eine Pumpe zu einer Heizeinrichtung gefördert werden kann, um dann das heiße Wasser über eine Zuleitung in den Filterhalter 4 einzuleiten.

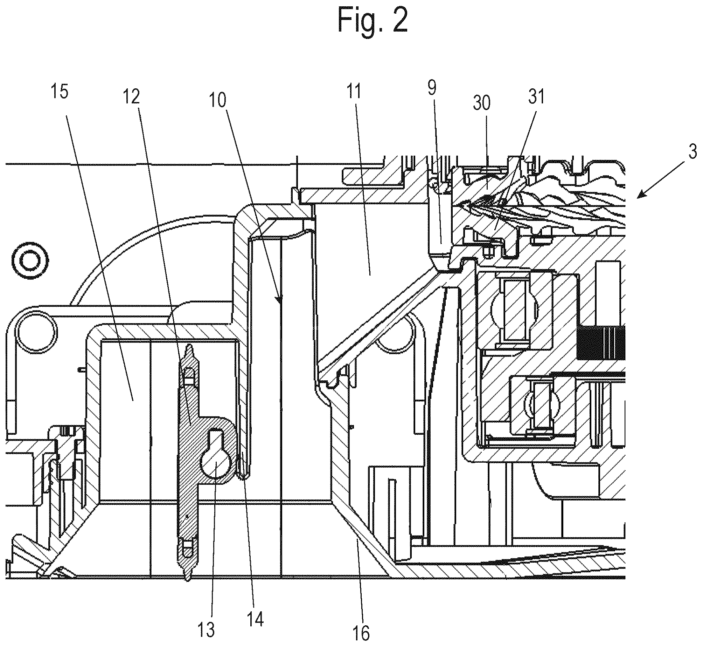

In Figur 2 ist eine Schnittansicht durch die Kaffeemaschine 1 gezeigt, die den Bereich zwischen Mahlwerk 3 und Filterhalter 4 zeigt. Das Mahlwerk 3 umfasst zwei relativ zueinander drehbare Mahlscheiben 30 und 31, die zum Zerkleinern der Kaffeebohnen aus dem Behälter 2 eingesetzt werden. Das Mahlwerk 3 besitzt einen Auslass 9, der zu einem Schacht 10 führt. Der Schacht 10 ist winkelförmig ausgebildet und umfasst benachbart zu dem Auslass 9 eine Rutsche 11 und einen sich daran anschließenden vertikalen Abschnitt. Der Schacht 10 kann auch eine andere Geometrie besitzen, um das Kaffeemehl aus dem Mahlwerk 3 in den Filterhalter 4 zu fördern.

In dem Schacht 10 ist eine Verschlussvorrichtung mit einer drehbaren Klappe 12 angeordnet, die im Wesentlichen plattenförmig ausgebildet ist und um eine Achse 13 drehbar ist. Die Achse 13 befindet sich dabei außerhalb des Schachtes 10, der benachbart zu der Achse 13 durch eine Wand 14 begrenzt wird, die im Wesentlichen vertikal ausgerichtet ist. Benachbart zu dem Schacht 10 ist eine nach unten offene Kammer 15 ausgebildet, in die die Klappe 12 in einer Öffnungsposition zumindest teilweise einfügbar ist, so dass die Klappe 12 in der Öffnungsposition geschützt angeordnet ist.

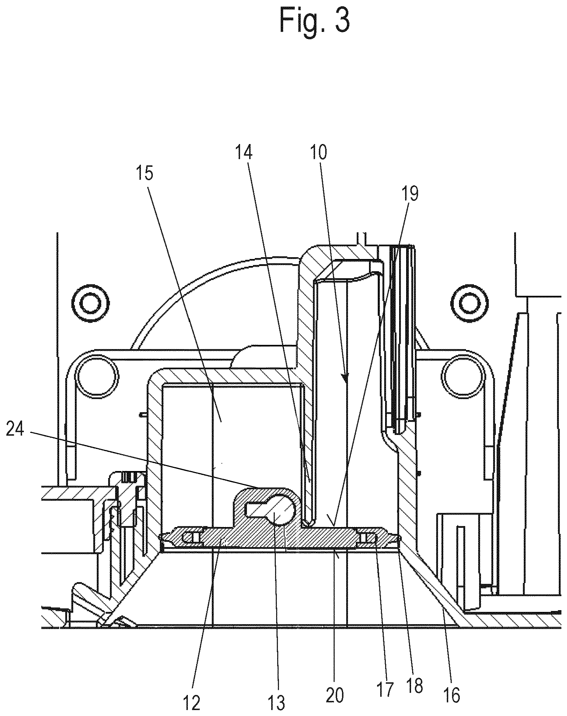

In Figur 3 ist eine Schließposition der Klappe 12 gezeigt. Durch ein Drehen der Klappe 12 um die Achse 13 um etwa 90° ist die Klappe 12 von einer vertikalen Position in eine horizontale Position bewegt worden. Eine Oberseite 19 eines Teils der Klappe 12 dichtet dabei den Schacht 10 zur Oberseite hin ab, während ein weiterer Teil der Klappe 12 die Kammer 15 abdichtet. Eine Unterseite 20 der Klappe 12 ist einem Raum zugewandt, den beim Brühen von Kaffee auch Wasserdampf erreichen kann, so dass die Klappe 10 verhindert, dass Wasserdampf in den Schacht 10 und die Kammer 15 gelangen kann.

Die Klappe 12 ist im Wesentlichen plattenförmig ausgebildet und umfasst am äußeren Umfang eine Dichtung 17, die eine hervorstehende biegbare Dichtlippe 18 aufweist, die im Bereich des Schachtes 10 an eine Wand anlegbar ist. Diese Anlegelinien der Dichtlippe 18 definierten eine Ebene, zu der die Achse 13 im Wesentlichen parallel ausgerichtet ist.

Der Bereich des Schachtes 10 unterhalb der Klappe 12 ist durch Wände 16 begrenzt, die aufspreizend ausgebildet sind, beispielsweise in einem Winkel zwischen 20° bis 60° geneigt zur Vertikalen, so dass das Kaffeemehl, das durch den Schacht 10 herabfällt, nicht die Wände 16 berührt, die beim Brühvorgang mit Kondenswasser belegt werden können.

An der Klappe 12 ist ein Anschlag 24 ausgebildet, der in der Öffnungsposition gegen eine Wand 14 des Schachtes 10 anschlagen kann, um die Drehbewegung der Klappe 12 zu begrenzen. Die Wand 14 bildet dabei die Trennwand zwischen dem Schacht 10 und der nach offenen Aufnahmekammer 15 zur Aufnahme eines Teils der Klappe 12.

Bei einer Drehbewegung der Klappe 12 in Schließrichtung bildet eine Oberseite 19 der Klappe 12 einen Anschlag und kann an der unteren Stirnseite der Wand 14 zur Anlage kommen, so dass auch diese Drehbewegung begrenzt ist.

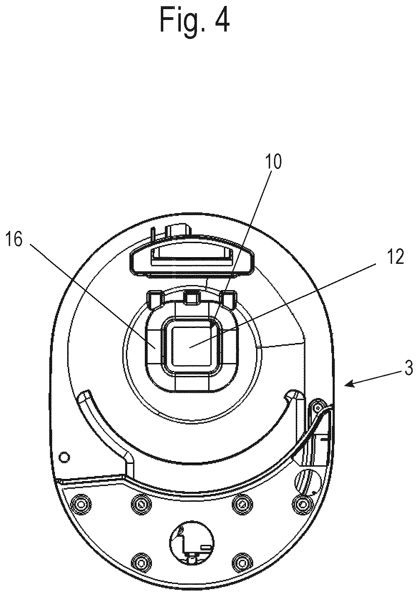

In Figur 4 ist der Bereich des Schachtes 10 mit einer geschlossenen Klappe 12 von unten gezeigt. Um die Klappe 12 befinden sich Wände 16, die aufspreizend angeordnet sind. Die Klappe 12 ist in Draufsicht im Wesentlichen quadratisch ausgebildet, kann aber auch rechteckig oder oval sein oder eine andere Geometrie aufweisen.

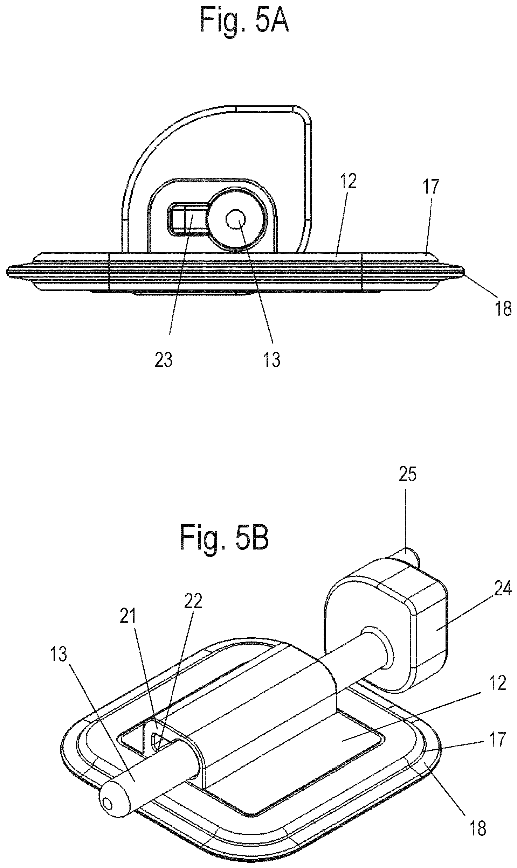

In den Figuren 5A und 5B ist die Klappe 12 mit der Achse 13 im Detail gezeigt. Die im Wesentlichen plattenförmige Klappe 12 weist ein integral ausgebildetes Lager 21 auf, das zur Durchführung der stiftförmigen Achse 13 dient. Das Lager 21 besitzt dabei einen nicht exakt kreisförmigen Querschnitt, sondern eine radial von der Achse 13 hervorstehende Kammer 22, in die ein Mitnehmer 23 eingefügt ist, der mit der Achse 13 verbunden oder integral mit dieser ausgebildet ist. Dadurch ist die Klappe 12 drehfest mit der Achse 13 verbunden.

An der Achse 13 ist ferner ein Block mit dem Anschlag 24 fixiert oder integral ausgebildet, an dem ein Stift 25 zur Verbindung mit Antriebsmitteln vorgesehen ist. Der Stift 25 kann beispielsweise über ein Getriebe mit Zahnrädern mit einem Motor oder einem anderen Antrieb gekoppelt sein, der über eine Steuerung betätigt wird, um beim Mahlen von Kaffeebohnen durch das Mahlwerk 3 die Klappe 12 in die Öffnungsposition zu bewegen und dann vor dem Brühvorgang in die Schließposition zu bewegen.

In dem dargestellten Ausführungsbeispiel ist die Achse 13 im Wesentlichen mittig an der Klappe 12 angeordnet. Es ist auch möglich, die Klappe 12 asymmetrisch relativ zur Achse 13 anzuordnen, um die nach unten offene Kammer 15 zu verkleinern. Beispielsweise könnte der in Figur 3 zur linken Seite von der Achse 13 hervorstehende Abschnitt der Klappe 12 gekürzt oder weggelassen werden.

### Bezugszeichenliste

- 1: Kaffeemaschine
- 2: Behälter
- 3: Mahlwerk
- 4: Filterhalter
- 5: Kanne
- 6: Sockel
- 7: Bedieneinheit
- 8: Wassertank
- 9: Auslass
- 10: Schacht
- 11: Rutsche
- 12: Klappe
- 13: Achse
- 14: Wand
- 15: Kammer
- 16: Wand
- 17: Dichtung
- 18: Dichtlippe
- 19: Oberseite
- 20: Unterseite
- 21: Lager
- 22: Kammer
- 23: Mitnehmer
- 24: Anschlag
- 25: Stift
- 30: Mahlscheibe
- 31: Mahlscheibe

## Patentansprüche

1. Kaffeemaschine (1) umfassend:
a) einen Behälter (2) für Kaffeebohnen;
b) ein Mahlwerk (3), dem Kaffeebohnen aus dem Behälter (2) zuführbar sind;
c) einen Filterhalter (4), in den gemahlenes Kaffeemehl aus dem Mahlwerk (3) über einen Schacht (10) zuführbar ist;
d) eine Zuführeinrichtung für heißes Wasser, das in den Filterhalter (4) einleitbar ist;
e) wobei in dem Schacht (10) zwischen Mahlwerk (3) und Filterhalter (4) eine Verschlussvorrichtung mit einer drehbaren Klappe (12) vorgesehen ist, die zwischen einer Öffnungs- und einer Schließposition bewegbar ist,
f) wobei die Klappe (12) über eine Achse (13) drehbar ist, die im Wesentlichen parallel zu einer Ebene der Klappe (12) verläuft,
**dadurch gekennzeichnet, dass** die Klappe (12) eine am äußeren Umfang angeordnete Dichtung (17) aufweist und die Dichtung (17) eine nach außen hervorstehende biegbare Dichtlippe (18) aufweist.

2. Kaffeemaschine nach Anspruch 1, **dadurch gekennzeichnet, dass** die Ebene der Klappe (12) einer Dichtebene in der Schließposition der Klappe (12) entspricht.

3. Kaffeemaschine nach Anspruch 1 oder 2, **dadurch gekennzeichnet, dass** die Klappe (12) in der Schließposition eine Oberseite (19) aufweist, die zumindest teilweise in dem Schacht (10) angeordnet ist und die Oberseite (19) der Klappe (12) in der Öffnungsposition einen Wandabschnitt ausbildet, der einer Innenseite des Schachtes (10) zugewandt ist.

4. Kaffeemaschine nach einem der vorhergehenden Ansprüche, **dadurch gekennzeichnet, dass** die Achse (13) der Klappe (12) außerhalb des Schachtes (10) angeordnet ist.

5. Kaffeemaschine nach einem der vorhergehenden Ansprüche, **dadurch gekennzeichnet, dass** die Klappe (12) zwischen Öffnungs- und Schließposition zwischen 60° bis 120°, insbesondere 80° bis 100°, drehbar ist.

6. Kaffeemaschine nach einem der vorhergehenden Ansprüche, **dadurch gekennzeichnet, dass** sich die Achse (13) in einer horizontalen Ebene erstreckt.

7. Kaffeemaschine nach einem der vorhergehenden Ansprüche, **dadurch gekennzeichnet, dass** neben dem Schacht (10) eine nach unten offene Aufnahmekammer (15) ausgebildet ist, in die die Klappe (12) in einer Öffnungsposition einfügbar ist.

8. Kaffeemaschine nach Anspruch 7, **dadurch gekennzeichnet, dass** die Klappe (12) in der Schließposition den Schacht (10) und die nach unten offene Aufnahmekammer (15) verschließt.

9. Kaffeemaschine nach einem der vorhergehenden Ansprüche, **dadurch gekennzeichnet, dass** die Klappe (12) in der Schließposition eine Unterseite aufweist, die in einer Öffnungsposition zur Außenseite des Schachtes (10) gewandt ist.

10. Kaffeemaschine nach einem der vorhergehenden Ansprüche, **dadurch gekennzeichnet, dass** der Schacht (10) unterhalb der Klappe (12) aufspreizend ausgebildet ist.

11. Kaffeemaschine nach einem der vorhergehenden Ansprüche, **dadurch gekennzeichnet, dass** an der Klappe (12) ein Anschlag (24) ausgebildet ist, der an einer Wand (14) des Schachtes (10) anlegbar ist.

12. Kaffeemaschine nach einem der vorhergehenden Ansprüche, **dadurch gekennzeichnet, dass** an der Klappe (12) ein integral ausgebildetes Lager (21) zur Aufnahme der Achse (13) ausgebildet ist.

13. Kaffeemaschine nach einem der vorhergehenden Ansprüche, **dadurch gekennzeichnet, dass** die Klappe (12) über einen Motor drehbar ist, der über ein Getriebe mit der Achse (13) der Klappe (12) verbunden ist.

14. Kaffeemaschine nach einem der vorhergehenden Ansprüche, **dadurch gekennzeichnet, dass** der Schacht (10) zwischen Mahlwerk (3) und Filterhalter (4) winkelförmig verläuft.

## Claims

1. Coffee machine (1) comprising:
a) a container (2) for coffee beans;
b) a grinder (3) to which coffee beans can be fed from the container (2);
c) a filter holder (4) into which ground coffee from the grinder (3) can be fed via a chute (10);
d) a supply device for hot water which can be introduced into the filter holder (4);
e) wherein a closing device with a rotatable flap (12) is provided in the chute (10) between the grinder (3) and the filter holder (4), which flap is movable between an open and a closed position,
f) wherein the flap (12) is rotatable about an axis (13) substantially parallel to a plane of the flap (12),
**characterized in that** the flap (12) has a seal (17) disposed on the outer periphery and **that** the seal (17) has an outwardly projecting flexible sealing lip (18).

2. Coffee machine according to claim 1, **characterized in that** the plane of the flap (12) corresponds to a sealing plane in the closed position of the flap (12).

3. Coffee machine according to claim 1 or 2, **characterized in that** the flap (12) in the closed position has an upper side (19) arranged at least partially in the chute (10) and the upper side (19) of the flap (12) in the open position forms a wall portion facing an inner side of the chute (10).

4. Coffee machine according to one of the preceding claims, **characterized in that** the axis (13) of the flap (12) is arranged outside the chute (10).

5. Coffee machine according to one of the preceding claims, **characterized in that** the flap (12) is rotatable between opening and closing positions between 60° to 120°, in particular 80° to 100°.

6. Coffee machine according to any one of the preceding claims, **characterized in that** the axis (13) extends in a horizontal plane.

7. Coffee machine according to one of the preceding claims, **characterized in that** a downwardly open receiving chamber (15) is formed next to the chute (10), into which the flap (12) can be inserted in an open position.

8. Coffee machine according to claim 7, **characterized in that** the flap (12) in the closed position closes the chute (10) and the downwardly open receiving chamber (15).

9. Coffee machine according to any one of the preceding claims, **characterized in that the** flap (12), in the closed position, has an underside which, in an open position, faces the outside of the chute (10).

10. Coffee machine according to one of the preceding claims, **characterized in that** the chute (10) below the flap (12) is designed to spread open.

11. Coffee machine according to one of the preceding claims, **characterized in that** a stop (24) is formed on the flap (12), which stop can be placed against a wall (14) of the chute (10).

12. Coffee machine according to one of the preceding claims, **characterized in that** an integrally formed bearing (21) for receiving the axis (13) is formed on the flap (12).

13. Coffee machine according to one of the preceding claims, **characterized in that** the flap (12) is rotatable by means of a motor which is connected to the axis (13) of the flap (12) by means of a gear.

14. Coffee machine according to one of the preceding claims, **characterized in that** the chute (10) between the grinder (3) and the filter holder (4) is angular.

## Revendications

1. Machine à café (1) comprenant :
a) un réservoir (2) pour des grains de café ;
b) un moulin (3) auquel des grains de café peuvent être amenés depuis le réservoir (2) ;
c) un porte-filtre (4) dans lequel du café moulu peut être amené depuis le moulin (3) par une descente (10) ;
d) une installation d'arrivée pour de l'eau chaude qui peut être amenée dans le porte-filtre (4) ;
e) dans laquelle est prévu dans la descente (10) entre le moulin (3) et le porte-filtre (4) un dispositif de fermeture avec un clapet pivotant (12) qui peut être déplacé entre une position d'ouverture et une position de fermeture ;
f) dans laquelle le clapet (12) peut être tourné à l'aide d'un axe (13) qui est sensiblement parallèle à un plan du clapet (12),
**caractérisée en ce que** le clapet (12) comporte un joint d'étanchéité (17) disposé sur la circonférence extérieure et le joint d'étanchéité (17) comporte une lèvre d'étanchéité flexible (18) qui dépasse vers l'extérieur.

2. Machine à café selon la revendication 1, **caractérisée en ce que** le plan du clapet (12) correspond à un plan d'étanchéité dans la position de fermeture du clapet (12).

3. Machine à café selon la revendication 1 ou 2, **caractérisée en ce que** le clapet (12) présente dans la position de fermeture une face supérieure (19) qui est disposée au moins en partie dans la descente (10) et la face supérieure (19) du clapet (12) forme dans la position d'ouverture une partie de paroi qui est tournée vers un côté intérieur de la descente (10).

4. Machine à café selon l'une des revendications précédentes, **caractérisée en ce que** l'axe (13) du clapet (12) est disposé à l'extérieur de la descente (10).

5. Machine à café selon l'une des revendications précédentes, **caractérisée en ce que** le clapet (12) peut être tourné de 60° à 120°, en particulier de 80° à 100°, entre la position d'ouverture et la position de fermeture.

6. Machine à café selon l'une des revendications précédentes, **caractérisée en ce que** l'axe (13) s'étend dans un plan horizontal.

7. Machine à café selon l'une des revendications précédentes, **caractérisée en ce qu'**est formée à côté de la descente (10) une chambre de réception (15) ouverte vers le bas, dans laquelle le clapet (12) peut être inséré dans une position d'ouverture.

8. Machine à café selon la revendication 7, **caractérisée en ce que** le clapet (12) ferme la descente (10) et la chambre de réception (15) ouverte vers le bas dans la position de fermeture.

9. Machine à café selon l'une des revendications précédentes, **caractérisée en ce que** le clapet (12) présente dans la position de fermeture une face inférieure qui est tournée vers l'extérieur de la descente (10) dans une position d'ouverture.

10. Machine à café selon l'une des revendications précédentes, **caractérisée en ce que** la descente (10) a une forme évasée en dessous du clapet (12).

11. Machine à café selon l'une des revendications précédentes, **caractérisée en ce qu'**est formée sur le clapet (12) une butée (24) qui peut être appliquée sur une paroi (14) de la descente (10).

12. Machine à café selon l'une des revendications précédentes, **caractérisée en ce qu'**est formé sur le clapet (12) un palier (21) d'un seul tenant destiné à recevoir l'axe (13).

13. Machine à café selon l'une des revendications précédentes, **caractérisée en ce que** le clapet (12) peut être tourné à l'aide d'un moteur qui est relié par un engrenage à l'axe (13) du clapet (12).

14. Machine à café selon l'une des revendications précédentes, **caractérisée en ce que** la descente (10) suit une forme en angle entre le moulin (3) et le porte-filtre (4).
